# EUROPÄISCHE PATENTSCHRIFT

(11) **EP 0 332 738 B1**
(45) Veröffentlichungstag und Bekanntmachung des Hinweises auf die Patenterteilung: **06.07.1994**
(21) Anmeldenummer: 88116674.8
(22) Anmeldetag: 07.10.1988
(51) Int. Cl.: C12G 3/08, B01D 17/00

(54) **Verfahren zur Reduktion des Alkoholgehaltes von alkoholischen Getränken**
Method for reducing the alcohol content in alcoholic beverages
Procédé pour diminuer la teneur en alcool de boissons alcoolisées

(30) Priorität: 11.02.1988 DE 3804236
(43) Veröffentlichungstag der Anmeldung: 20.09.1989
(73) Patentinhaber: Deutsche Carbone AG, 60407 Frankfurt (DE)
(72) Erfinder: Brüschke,Hartmut,Ernst,Arthur,Dr., 6907 Nussloch (DE); Schneider,Walter, 6901 Dossenheim (DE); Tusel, Günter F., 6650 Homburg/Saar (DE)
(74) Vertreter: Geissler, Bernhard, Dr. jur., Dipl.-Phys.

(56) Entgegenhaltungen:
- EP-A- 0 240 803
- EP-A- 0 254 758
- WO-A-86/05706
- Vorträge des VTL-Seminars: Trenntechniken am 19. und 20. Februar 1987 in Flein, Herausgeber: Dr. Herbert Buckenhüskes, Wissensshaftliche Publikation, Verband der Lebensmitteltechnologen e. V., Seiten 107-119

## Beschreibung

Die Erfindung betrifft ein Verfahren zur Reduktion des Alkoholgehaltes von alkoholischen Getränken, insbesondere von Bier und Wein, mittels Pervaporation.

In den letzten Jahren hat sich in verstärktem Maße ein Bedarf für alkoholische Getränke mit reduziertem Alkoholgehalt entwickelt, wobei insbesondere Bier und Wein zu nennen sind. Hierbei soll der Geschmack dieser Getränke möglichst unverändert erhalten bleiben und sich nicht von dem Geschmack der Getränke mit ursprünglichem Alkoholgehalt unterscheiden. Im folgenden wird für Getränke mit reduziertem Alkoholgehalt der Begriff alkoholarme Getränke verwendet.

Für den gestiegenen Bedarf für alkoholarme Getränke lassen sich eine Reihe von Ursachen angeben. Zunächst ist darauf hinzuweisen, daß die Verringerung des Alkoholgehaltes mit einer Verringerung des Kaloriengehaltes einhergeht. Dies bedeutet, daß alkoholarme Getränke auch von solchen Personen genossen werden können, die aus Gesundheitsgründen Diät halten müssen oder aus sonstigen Gründen keine üblichen alkoholischen Getränke genießen dürfen. Ferner hat die Zahl der alkoholbedingten Verkehrsunfälle sowohl zu einer Verschärfung von Kontrollen und Strafen als auch zu einem verstärkten Bewußtsein der Verkehrsteilnehmer über den Einfluß des Alkohols im Straßenverkehr geführt. Alkoholarme Getränke erlauben es ohne wesentliche Änderung der Trink- und Lebensgewohnheiten die Gefährdung durch Alkohol zu reduzieren.

Es hat daher nicht an Versuchen gefehlt, die üblichen Verfahren zur Abtrennung von Alkohol bzw. Ethanol aus seinen wässrigen Lösungen nach dem Stand der Technik auch zur Verminderung des Alkoholgehaltes von alkoholischen Getränken einzusetzen. Wesentlich für den Erfolg eines solchen Verfahrens ist es, daß - abgesehen von der gewünschten Verminderung des Alkoholgehaltes - keine weiteren Veränderungen des Getränkes auftreten, insbesondere nicht in Bezug auf Geschmack, Aussehen und Haltbarkeit.

Als leichter flüchtige Komponenete kann Ethanol aus alkoholischen Getränken, wie Wein oder Bier, abdestilliert und damit der Ethanolgehalt des Getränks vermindert werden. Ein solches Verfahren wird z. B. für Bier in Brauereiindustrie 71 (1986), Seite 480 beschrieben. Um wärmeempfindliche Bestandteile im Bier zu schonen, muß die Destillation bei niedriger Temperatur und damit unter vermindertem Druck durchgeführt werden. Unter diesen Bedingungen werden aus dem Bier neben Ethanol auch andere, für den Geschmack wesentliche Stoffe nach Maßgabe ihrer Flüchtigkeit entfernt, so daß sich eine Geschmacksbeeinträchtigung nicht vermeiden läßt. Darüber hinaus kommt es bei den erforderlichen Temperaturen zu einer Denaturierung von Eiweißkomponeneten, was ebenfalls zu Veränderungen des Geschmacks und des Aussehens des alkoholarmen Bieres führt. Durch den Destillationsprozeß unter verminderten Druck wird ferner die freie Kohlensäure aus dem Bier entfernt, die anschließend rückverdichtet und wieder zugeführt werden muß. Der technische Aufwand und die Kosten für eine solche Vakuumdestillation sind hoch, ohne das dies letzlich zu einem befriedigenden Ergebnis führt.

Ein weiteres Verfahren zur Reduktion des Alkoholgehaltes alkoholischer Getränke ist in Weinwirtsch. Tech. 9 (1986), Seite 346 beschrieben. Hierbei wird nach einem Dialyseprozeß die Flüssigkeit, deren Alkoholgehalt vermindert werden soll, über die eine Seite einer porösen Dialysemembran geführt, während auf der anderen Seite der Membran eine den Alkohol aufnehmende Flüssigkeit, z. B. Wasser, vorbeiströmt. Entsprechend der Konzentrationsdifferenz diffundiert Alkohol aus der alkoholischen Phase, z. B. Wein, in die aufnehmende Flüssigkeit. Da aber für alle Komponenten des Weines eine entsprechende Konzentrationsdifferenz über die Membran besteht, diffundieren diese Komponenten mit, so daß es auch bei diesem Verfahren zu einem Verlust an Geschmacksstoffen kommt. Als nachteilig erweist sich darüber hinaus, daß die aufnehmende Flüssigkeit (Dialysat) mit einem sehr niedrigen Alkoholgehalt anfällt und kaum wirtschaftlich genutzt oder vernichtet werden kann.

Ein weiteres Verfahren zur Alkoholreduktion ist in der US-A-4 617 127 und in der EP-A-0 162 240 beschrieben. Hierbei wird die Tatsache ausgenutzt, daß Membranen für die Umgekehrte Osmose mit einem Salzrückhaltevermögen für z. B. Natriumchlorid von mehr als 97 % ein Rückhaltevermögen für Ethanol von unter 90 % aufweisen. Unterwirft man daher z. B. Bier oder Wein mit Alkoholgehalten von 4 bzw. 10 % dem Verfahren der Umgekehrten Osmose, so erhält man einerseits ein Permeat, daß vor allem Wasser und etwas Alkohol enthält, als auch ein Retentat, das eine höhere Alkoholkonzentration als das ursprüngliche Getränk aufweist. Wird nun das Retentat mit reinem Wasser auf das ursprüngliche Volumen zurückverdünnt. so erhält man ein Produkt, dessen Alkoholgehalt unterhalb desjenigen des ursprünglichen Getränkes liegt. Nachteilig bei diesem Verfahren ist ebenfalls die Tatsache, daß unter der Einwirkung des erforderlichen hohen Druckes eine Denaturierung von Geschmacksstoffen auftritt, und daß neben Alkohol und Wasser auch andere Geschmacksstoffe durch die Membran hindurchtreten und damit verloren gehen. Ferner fällt als Permeat eine alkoholische Lösung niedriger Konzentration an, die aufbereitet oder entsorgt werden muß. Trotz der geschilderten Nachteile findet dieses Verfahren der Umgekehrten Osmose jedoch großtechnische Anwendung, was das Bedürfnis nach besseren Verfahren deutlich macht.

In Manuskript zu den Vorträgen des VLT-Seminars: "Trenntechniken" am 19. und 20. Februar 1987 in Flein, Herausgeber: Dr. Herbert Buckenhüskes, Wissenschaftliche Publikation, Verband der Lebensmitteltechnologen e.V. Esslinger Straße 72, D-7024 Filderstadt, Seiten 107 bis 119 ist ein Verfahren zur Reduktion des Alkoholgehaltes von Getränken mittels Pervaporation beschrieben. Zur Vermeidung des Verlustes des Aromastoffen wird hierbei eine Fraktionierung des Permeats mit anschließender Rückführung der Aromabestandteile als denkbarer Lösungsansatz erwähnt.

Die DE OS 36 10 011 beschreibt ein Verfahren zur Absolutierung von Alkohol mittels Pervaporation, wobei das Permeat einer fraktionierten Kondensation unterzogen und hierbei niederkonzentrierter und höherkonzentrierter Alkohol gewonnen wird. Der niederkonzentrierte Alkohol wird in eine erste Pervaporationstufe zurückgespeist, während der höherkonzentrierte Alkohol in einer zweiten Pervaporationstufe absolutiert wird.

In Chem.-Ing.-Tech. 58 (1986) 740 bis 742 ist ebenfalls ein Verfahren zur Aufkonzentrierung bzw. Absolutierung von Ethanol aus Ethanol/Wasser-Gemischen mittels Pervaporation beschrieben.

Gegenstand der Erfindung ist nun ein Verfahren zur Reduktion des Alkoholgehaltes von alkoholhaltigen Getränken gemäß Patentanspruch 1.

Beim Verfahren der Erfindung wird das ursprüngliche alkoholhaltige Getränk, z. B. Bier oder Wein, an der Zulaufseite einer Pervaporationsmembran zugeführt. Auf der Permeatseite erfolgt eine zweistufige Kondensation des Permeats, wobei sich an eine Hauptkondensation eine Nachkondensation anschließt, wobei die Nachkondensation wiederum mehrstufig sein kann. Bei der Hauptkondensation wird hierbei mit Drücken von 0,5 bis 50 mbar und Temperaturen von 0 bis -30°C gearbeitet, während die Nachkondensation bei abgestuften höheren Drücken als die Hauptkondensation bis zu Atmosphärendruck und bei Temperaturen von -20 bis -70° erfolgt, wobei diese Temperatur niedriger ist als die Temperatur dur Hauptkondensation. Es wurde nämlich gefunden, daß im alkoholischen Getränk enthaltene leicht flüchtige Aromastoffe durch die Membran permeieren. Diese leicht flüchtigen Aromastoffe werden - nach Maßgabe der Kondensationstemperatur einer einstufigen Kondensation - zwar im Kondensierten Permeat wiedergefunden; sie sind jedoch in dieser Form nicht verwertbar. Beim Verfahren der Erfindung wird deshalb die zweistufige Kondensation so durchgeführt, daß die Temperatur der Hauptkondensation absichtlich etwas höher gewählt wird, um eine Kondensation der leicht flüchtigen Aromastoffe zu verhindern; letztere werden vielmehr in der Nachkondensation bei Anwendung entsprechend niedriger Kondensationstemperaturen in konzentrierter Form zur Kondensation gebracht. Dieses konzentrierte Nachkondensat wird dann direkt dem Retentat zugesetzt, so daß die ursprüngliche Aromakomposition des Getränkes erhalten bleibt.

Der abgetrennte Alkohol wird im Hauptkondensat in einer Konzentration erhalten, die deutlich höher als die Konzentration in dem ursprünglichen alkoholischen Getränk ist. Hierdurch erhält man als Permeat ein direkt verwertbares Produkt, das darüber hinaus leicht zu reinem Alkohol aufkonzentriert werden kann.

Bei der Durchführung des Verfahrens der Erfindung ist man nicht, wie bei der vorher beschriebenen Vakuumdestillation, auf bestimmte Mindesttemperaturen angewiesen. Vielmehr kann man, nach Maßgabe der Temperaturempfindlichkeit des Alkoholgehaltes des ursprünglichen alkoholischen Getränks, die Verfahrenstemperatur erheblich weiter absenken, wodurch Temperaturschädigungen mit Sicherheit vermieden werden können. Das Verfahren der Erfindung wird im allgemeinen bei Zulauf-Temperaturen von 0 bis 80 °C, vorzugsweise 20 bis 45 °C, durchgeführt, wobei Temperaturen von 30 bis 40 °C besonders bevorzugt sind. Das Verfahren wird entweder bei Atmosphärendruck oder leicht erhöhtem Druck auf der Zulaufseite durchgeführt. Letzteres ist insbesondere bei kohlensäurehaltigen Getränken, wie Bier, zu empfehlen, um ein Entweichen der freien Kohlensäure zu vermeiden. Typische Verfahrensdrucke fürdie Zulaufseite liegen im Bereich von 1 bis 5 bar. Bei höherem Druck kann es zu Dichtigkeitsproblemen kommen.

Erfindungsgemäß sind alle Pervaparationsmembranen geeignet, die für Alkohol (Ethanol) ein höheres Permeationsvermögen als für Wasser besitzen. Eine bevorzugte Gruppe von Membranen sind solche aus Silikonen, insbesondere aus Polydimethylsiloxan. Hierbei sind wiederrum solche Polydimethylsiloxane bevorzugt, die neben Methylgruppen auch größere und/oder teiloder perfluorierte Alkyl- oder Arylsubstituenten als Seitenketten an Siliciumatome gebunden enthalten. Eine weitere bevorzugte Klasse von Membranen ist in der EP-A-0 254 758 beschrieben. Hierbei handelt es sich um Membranen aus Gemischen von hydrophoben anorganischen Stoffen, wie Silicaliten, und Polysiloxanen. Auch Membranen mit ionenaustauschenden Eigenschaften, z. B. anionenaustauschende Membranen, sind zur Durchführung des erfindungsgemäßen Verfahrens geeignet.

Zur Durchführung des Verfahrens der Erfindung können übliche Pervaporationsapparate verwendet werden. Die Pervaporationsmembranen finden hierbei in Form sog. Membranmodule Verwendung. Der Ausdruck Modul bezeichnet hier die Baueinheit aus der eigentlichen Membran und ihrer Haltevorrichtung. Geeignete Membranmodule sind z. B. in der EP-A-0 214 496 beschrieben. Dem Fachmann sind aber auch andere Membranmodule, z. B. tubulare Membranmodule oder Spiralwickelmodule bekannt.

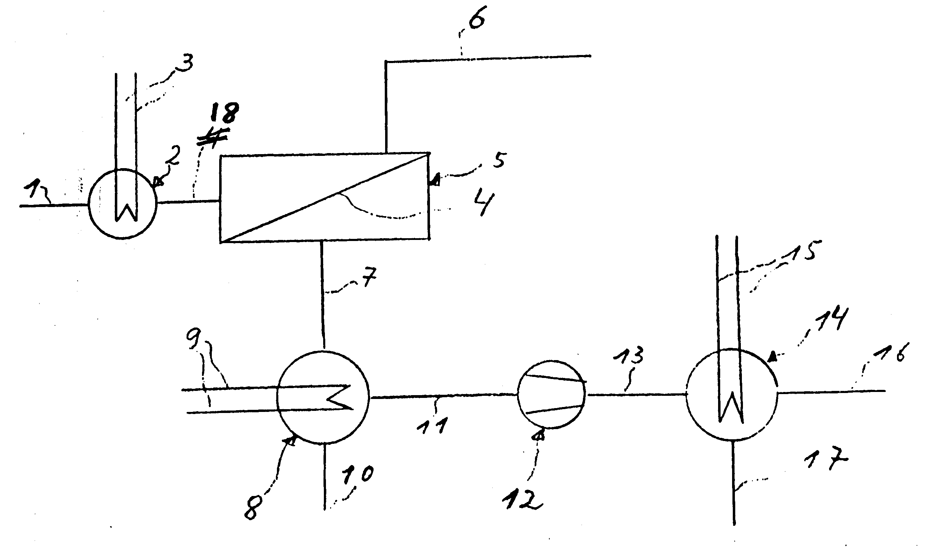

Nachfolgend ist die Durchführung des Verfahrens der Erfindung anhand der Zeichnung für Bier beschrieben. Die einzige Figur zeigt eine Pervaporationsvorrichtung mit Membranmodul 5, Vorwärmeinrichtung 2, Hauptkondensator 8, Nachkondensator 14 und Vakuumpumpe 12.

Über die Leitung 1 wird handelsübliches Exportbier eingespeist, und zwar zur Verhinderung des Austritts von freier Kohlensäure mit einem Druck von 2,2 bar, der z. B. mittels einer Pumpe (nicht dargestellt) aufrechterhalten wird. Im Vorwärmer 2 wird die Temperatur des Bieres mittels Heizung 3 auf eine Temperatur von 35 °C gebracht, worauf das Bier über eine Leitung 18 in den Membranmodul 5 eintritt. Der Membranmodul 5 enthält eine Pervaporationsmembran 4 aus Polydimethylsiloxan, das etwa 70 Gewichtsprozent eines hydrophoben Zeoliths (Silicalite) enthält. Weitere Verfahrensparameter sind in Beispiel 3 beschrieben. Das Permeat wird über die Leitung 7 ausgetragen und tritt in einen Hauptkondensator 8 ein, der über eine Kühlleitung 9 gekühlt wird und über eine Leitung 11 mit einer Vakuumpumpe 12 und eine weitere Leitung 13 mit einem Nachkondensator 14 (einstufige Nachkondensation) verbunden ist. Im Hauptkondensator 8 erfolgt die Kondensation der Hauptmenge des Permeats, das über eine Leitung 10 ausgetragen wird. Die Vakuumpumpe 12 erzeugt den gewünschten Unterdruck von 15 mbar im Hauptkondensator 8. Der Nachkondensator 14 wird über eine Kühlleitung 15 gekühlt, ist über eine Leitung 16 mit der Atmosphäre verbunden und arbeitet somit bei Atmosphärendruck. Das Nachkondensat wird über eine Leitung 17 ausgetragen. Das Verhältnis der im Haupt- und Nachkondensator 8 und 14 anfallenden Kondensatmengen beträgt etwa 200 : 8. Im Membranmodul 5 erhält man als Retentat ein alkoholarmes Produkt, das über eine Leitung 6 ausgetragen wird und einen Alkoholgehalt von nur noch 1,7 Gewichtsprozent besitzt. Diesem Produkt wird das aus dem Nachkondensator 14 über die Leitung 16 ausgetragene Nachkondensat zugesetzt, bei dem es sich um leicht flüchtige Aromastoffe des Bieres handelt, die zu dem typischen gewünschten Biergeschmack beitragen. Anschließend erfolgt Rückverdünnung mit reinem Wasser auf das ursprüngliche Volumen, wobei man das gewünschte alkoholarme Bier mit einem Ethanolgehalt von 1,8 Gewichtsprozent erhält.

Nach Maßgabe der praktischen Gegebenheiten kann die gezeigte Vorrichtung vielfältig abgewandelt werden. Z. B. ist es in der praktischen Durchführung sinnvoll, die gesamte Membranfläche auf mehrere Membranmodule aufzuteilen, die jeweils auf der Permeatseite in den gleichen Hauptkondensator münden. Auf der Retentatseite sind die Membranmodule so miteinander verknüpft, daß das Retentat des vorhergehenden Membranmoduls jeweils den Zulauf für den folgenden Membranmodul darstellt. Erforderlichenfalls werden hierbei auftretende Wärmeverluste durch zwischengeschaltete Vorwärmer ausgeglichen.

Ferner kann die Nachkondensation in einer ersten Stufe unter vermindertem Druck erfolgen. Die Leitung 16 der Figur ist dann mit der Saugseite einer weiteren Vakuumpumpe verbunden (nicht dargestellt), an deren Druckseite gegebenenfalls ein weiterer Nachkondensator (nicht dargestellt) angeordnet ist. Der erste Nachkondensator 14 arbeitet dann bei einem Druck zwischen dem des Hauptkondensators 8 und Atmosphärendruck.

Die Beispiele erläutern die Erfindung.

### Beispiel 1

Es werden 5 l französischer Rotwein der Sorte "CarbernetSauvignon" verwendet. Die Membran ist etwa 60 »m dick und besteht aus einem Polydimethylsiloxan, bei dem ein Teil der Methylseitengruppen durch Propyl- und Butylgruppen ersetzt ist. Die Membranfläche beträgt 0,45 m². Auf der Zulaufseite beträgt die Temperatur 30 °C, der Druck 1,1 bar. Nach viermaligem Überleiten über die Membran erhält man 4,1 1 alkoholarmes Produkt als Retentat mit einem Alkoholgehalt von 3,9 Gewichtsprozent. Auf der Permeatseite beträgt der Druck 20 mbar, die Hauptkondensation erfolgt bei - 5 °C. Hierbei werden als Permeat zunächst 0,9 1 Hauptkondensat mit einem Alkoholgehalt von 38 Gewichtsprozent erhalten. Zusätzlich wird auf der Druckseite der verwendeten Vakuumpumpe bei - 20 °C unter Atmosphärendruck nachkondensiert, wobei als Permeat weitere 10 g Nachkondensat mit einem Alkoholgehalt von 80 Gewichtsprozent erhalten werden. Dieses Nachkondensat enthält offensichtlich Wein-Aromastoffe, während das Hauptkondensat nur aus Ethanol und Wasser besteht. Nachdem man das als Retentat erhaltene alkoholarme Produkt mit dem Nachkondensat versetzt und mit reinem Wasser auf das ursprüngliche Volumen rückverdünnt hat - der Alkoholgehalt beträgt dann 3,4 Gewichtsprozent - wird dieser alkoholarme Wein der organoleptischen Prüfung unterworfen. Hierbei kann kein Geschmacksunterschied zum ursprünglichen Wein festgestellt werden. Im Permeat sind außer Ethanol und Wasser keine anderen Bestandteile analytisch nachweisbar. Das Permeat kann somit unmittelbar zu Gebrauchszwecken aufgearbeitet werden.

### Beispiel 2

Verwendet werden 5,2 l Weißwein mit einem Alkoholgehalt von 10,6 Gewichtsprozent. Die Membran besteht aus Polydimethylsiloxan, das 70 Gewichtsprozent eines hydrophoben Zeolithen (Silicalite) enthält. Die Membran ist etwa 60 »m dick und besitzt eine Fläche von 0,45 m². Auf der Zulaufseite beträgt die Temperatur 40 °C, der Druck 1,1 bar. Nach fünfmaligem herleiten über die Membran erhält man 4,6 l Retentat mit einem Alkoholgehalt von 4,2 Gewichtsprozent. Auf der Permeatseite erfolgt die Kondensation bei 20 mbar und - 10 °C. Hierbei erhält man als Permeat zunächst ein Hauptkondensat von 0,6 l mit einem Alkoholgehalt von 58 Gewichtsprozent. Auf der Druckseite der Vakuumpumpe werden dann bei - 25 °C und Atmosphärendruck als weiteres Permeat 10 g Nachkondensat mit einem Alkoholgehalt von 85 Gewichtsprozent erhalten. Dieses Nachkondensat enthält offensichtlich Aromastoffe. Nachdem man das als Retentat erhaltene alkoholarme Produkt mit diesem Nachkondensat versetzt und mit reinem Wasser auf das ursprüngliche Volumen rückverdünnt hat - der Alkoholgehalt beträgt dann 3,9 Gewichtsprozent - wird der erhaltene alkoholarme Wein der organoleptischen Prüfung unterworfen. Hierbei kann kein Geschmacksunterschied zum ursprünglichen Wein festgestellt werden. Die Reinheit des Permeats entspricht Beispiel 1.

### Beispiel 3

Verwendet werden 5 l Exportbier mit einem Alkoholgehalt von 4 Gewichtsprozent. Die Membran ist die gleiche wie in Beispiel 2 beschrieben. Auf der Zulaufseite beträgt die Temperatur 30 °C, der Druck 2,2 bar. Beim einmaligen Überleiten über die Membran erhält man 4,8 l alkoholarmes Retentat mit einem Alkoholgehalt von 1,7 Gewichtsprozent. Auf der Permeatseite beträgt der Druck 15 mbar. Die Kondensation erfolgt bei - 7 °C. Hierbei erhält man zunächst als Permeat 0,2 l Hauptkondensat mit einem Alkoholgehalt von 47 Gewichtsprozent. Gemäß Beispiel 1 wird dann bei - 25 °C und Atmosphärendruck eine Nachkondensation durchgeführt, wobei man als weiteres Permeat 8 g Nachkondensat mit einem Alkoholgehalt von 85 Gewichtsprozent erhält. Dieses Nachkondensat enthält offensichtlich Bier-Aromastoffe. Das Retentat wird zunächst mit dem Nachkondensat versetzt und dann mit reinem Wasser auf das Ausgangsvolumen rückverdünnt. Das so erhaltene alkoholarme Bier hat einen Alkoholgehalt von 1,8 Gewichtsprozent. Die organoleptische Prüfung läßt keinerlei Unterschied zum ursprünglichen Bier erkennen. Die Reinheit des Permeats entspricht Beispiel 1.

## Patentansprüche

1. Verfahren zur Reduktion des Alkoholgehaltes von alkoholhaltigen Getränken, insbesondere von Bier oder Wein, mittels Pervaporation, wobei das Permeat fraktioniert und teilweise rückgeführt wird,
**dadurch gekennzeichnet,** man die Fraktionierung des anfallenden Permeats als zweistufige Kondensation durchführt, wobei eine Hauptkondensation bei Drücken von 0,5 bis 50 mbar und bei Temperaturen von 0 bis -30 °C und eine ein- oder mehrstufige Nachkondensation bei abgestuften höheren Drücken als die Hauptkondensation, bis zu atmosphärischem Druck und bei Temperaturen von -20 bis -70 °C, wobei diese Temperatur niedriger ist als die Temperatur der Hauptkondensation, erfolgt, und daß man das als Nachkondensat erhaltene Permeat dem als Retentat erhaltenen alkoholärmeren Produkt zusetzt.

2. Verfahren nach Anspruch 1, dadurch gekennzeichnet, daß man eine Zulauftemperatur von 20 bis 45 °C, insbesondere 30 bis 40 °C anwendet.

3. Verfahren nach Anspruch 1 oder 2 dadurch gekennzeichnet, daß man das als Retentat erhaltene alkoholärmere Produkt mit Wasser auf die ursprüngliche Menge rückverdünnt.

4. Verfahren nach einem der vorhergehenden Ansprüche, dadurch gekennzeichnet, daß man auf der Zulaufseite einen höheren als Atmosphärendruck, vorzugsweise einen Druck zwischen 1 und 5 bar anwendet.

5. Verfahren nach einem der vorhergehenden Ansprüche, dadurch gekennzeichnet, daß man von einem alkoholischen Getränk mit einem über der Fermentationsgrenze liegenden Alkoholgehalt ausgeht.

6. Verfahren nach einem der vorhergehenden Ansprüche, dadurch gekennzeichnet, daß man eine Pervaporationsmembran aus einem Polysiloxan verwendet.

7. Verfahren nach Anspruch 6, dadurch gekennzeichnet, daß man eine Membran aus Polydimethylsiloxan verwendet.

8. Verfahren nach Anspruch 7, dadurch gekennzeichnet, daß man eine Membran aus einem Polydimethysiloxan verwendet, in dem die Methylgruppen teilweise oder vollständig durch höhere Alkylgruppen oder durch Arylgruppen ersetzt sind.

9. Verfahren nach Anspruch 8, dadurch gekennzeichnet, daß die höheren Alkylgruppen oder Arylgruppen teilweise oder vollständig fluoriert sind.

10. Verfahren nach einem der Ansprüche 6 bis 9, dadurch gekennzeichnet, daß man eine Membran aus einem Polysiloxan verwendet, das einen Füllstoff mit hohem Sorptionsvermögen für Ethanol enthält.

11. Verfahren nach Anspruch 10, dadurch gekennzeichnet, daß man einen Füllstoff aus der Gruppe der Zeolithe verwendet.

## Claims

1. A process for reducing the alcohol content of alcohol-containing beverages, in particular of beer or wine, by way of pervaporation, wherein the permeate is fractionated and partially recycled,
**characterized by** carrying out the fractionation of the obtained permeate as two-step condensation, wherein a main condensation is carried out at a pressure of from 0.5 to 50 mbar and at a temperature of from 0 to -30 °C, and a one-step or multi-step post-condensation is carried out at step-wise increased higher pressures compared to the main condensation, up to atmospheric pressure and at a temperature of from -20 to -70 °C, wherein said temperature is lower than the temperature of the main condensation, and adding the permeate obtained as post-condensate to the lower-alcohol product obtained as retentate.

2. The process of claim 1, characterized by utilizing a feed temperature of from 20 to 45 °C, and in particular from 30 to 40 °C.

3. The process of claim 1 or 2, characterized in that the lower-alcohol product obtained as retentate is rediluted with water to the original volume.

4. The process of any of the preceding claims, characterized in that, at the feed side a pressure higher than atmospheric pressure, preferably a pressure between 1 and 5 bar is used.

5. The process of any of the preceding claims, characterized in that an alcohol-containing beverage having an alcohol content beyond the fermentation limit is used as starting material.

6. The process of any of the preceding claims, characterized in that a pervaporation membrane of a polysiloxane is used.

7. The process of claim 6, characterized in that a membrane of polydimethyl siloxane is used.

8. The process of claim 7, characterized in that a membrane of a polydimethyl siloxane is used, in which the methyl groups are partially or completely replaced by higher alkyl groups or aryl groups.

9. The process of claim 8, characterized in that said higher alkyl groups or aryl groups are partially or completely fluorinated.

10. The process of any of claims 6 to 9, characterized in that a membrane of a polysiloxane is used containing a filler having a high sorption capacity for ethanol.

11. The process of claim 10, characterized in that a filler of the group consisting of zeolites is used.

## Revendications

1. Procédé pour la réduction de la teneur en alcool de boissons alcoolisées, en particulier de bière ou de vin, par pervaporation, où l'on fractionne et recycle partiellement le perméat,
**caractérisé en ce que** l'on opère le fractionnement du perméat produit par condensation à deux étages, où a lieu une condensation principale à des pressions de 0,5 à 50 mbar et à des températures de 0 à -30°C et une condensation additionnelle à un ou plusieurs étages à des pressions étagées plus élevées que pour la condensation principale, jusqu'à la pression atmosphérique et à des températures de -20 à -70°C, où cette température est plus faible que la température de la condensation principale, et en ce que l'on ajoute au produit plus pauvre en alcool conservé comme rétentat le perméat conservé comme condensat additionnel.

2. Procédé selon la revendication 1, caractérisé en ce que l'on utilise une température d'apport de 20 à 45°C, en particulier de 30 à 40°C.

3. Procédé selon la revendication 1 ou 2, caractérisé en ce que l'on rétablit avec de l'eau à la quantité d'origine la dilution du produit plus pauvre en alcool conservé comme rétentat.

4. Procédé selon l'une des revendications précédentes, caractérisé en ce que l'on utilise du côté de l'apport une pression supérieure à la pression atmosphérique, de préférence une pression entre 1 et 5 bar.

5. Procédé selon l'une des revendications précédentes, caractérisé en ce que l'on part d'une boisson alcoolisée avec une teneur en alcool située au-dessus de la limite de fermentation.

6. Procédé selon l'une des revendications précédentes, caractérisé en ce que l'on utilise une membrane de pervaporation en un polysiloxane.

7. Procédé selon la revendication 6, caractérisé en ce que l'on utilise une membrane en polydiméthylsiloxane.

8. Procédé selon la revendication 7, caractérisé en ce que l'on utilise une membrane en un polydiméthylsiloxane dans lequel les groupes méthyle sont partiellement ou totalement substitués par des groupes alkyle supérieurs ou par des groupes aryle.

9. Procédé selon la revendication 8, caractérisé en ce que les groupes alkyle supérieurs ou les groupes aryle sont partiellement ou totalement fluorés.

10. Procédé selon l'une des revendications 6 à 9, caractérisé en ce que l'on utilise une membrane en un polysiloxane qui comporte une matière de remplissage avec une capacité élevée de sorption à l'égard de l'éthanol.

11. Procédé selon la revendication 10, caractérisé en ce que l'on utilise une matière de remplissage du groupe des zéolithes.
